Europäisches Patentamt

European Patent Office

Office européen des brevets

(19)

(11) Publication number: **0 325 093**
**A2**

(12)

# EUROPEAN PATENT APPLICATION

(21) Application number: **88830542.2**

(51) Int. Cl.4: **G01H 1/00 , G10K 11/00**

(22) Date of filing: **19.12.88**

(30) Priority: **22.01.88 IT 4756488**

(43) Date of publication of application:
**26.07.89 Bulletin 89/30**

(84) Designated Contracting States:
**AT BE CH DE ES FR GB GR LI LU NL SE**

(71) Applicant: **CENTRO SVILUPPO MATERIALI S.p.A.**
**P.O. Box 10747 Via di Castel Romano 100-102**
**I-00129 Roma(IT)**

(72) Inventor: **Canella, Giuliano**
**Via dei Motoristi 87**
**I-00143 Roma(IT)**
Inventor: **Monti, Federico**
**Via Umile 16**
**I-00144 Roma(IT)**

(74) Representative: **Mariani, Giulio**
**c/o Centro Sviluppo Materiali SpA P.O. BOX 10747**
**I-00100 Roma Eur(IT)**

(54) Shock-wave ultrasonic device.

(57) Small-size, highly-sensitive, high-powered shock-wave ultrasonic device for testing highly absorbent bodies such as rock, marble, refractories or metals at high temperature, exceeding 1000 °C, said device comprising the following elements:
-mechanical shock-wave ultrasonic generator;
-detector transducer;
-means for synchronizing signal between generator and detector;
-means for recording transmitted signal.

EP 0 325 093 A2

## SHOCK-WAVE ULTRASONIC DEVICE.

Present invention relates to a shock-wave ultrasonic device. More precisely refers to a small-size, highly-sensitive, high-powered device for measuring highly absorbent materials such as, for instance, marble, stone refractories or bodies, particularly metals, at high temperatures, even of 1000 °C and above.

It is well known that to make accurate measurements, ultrasonic devices must be highly sensitive and powerful enough to ensure the waves to travel through the piece to be tested.

However, in conventional known devices such characteristics are unsatisfactory.

Said devices use transducers based on two different kinds of generating ultrasonic waves, namely piezoelectric transducers and electromagnetic transducers.

Piezoelictric transducers for testing highly-absorbent bodies must operate at low frequencies and have to be coupled to the body via a large contact area. The coupling media generally adopted are liquids, gels or gums.

For bodies at high temperature, the transducers need high pressures to be coupled and must also be protected from the heat by appropriate cooling circuits. All this means that the transducers are large. In addition to this the power of such transducer is insufficient to bodies like stone, marble or refractories, for instance.

Furthermore for bodies at temperatures above 500 °C, for example metals, conventional coupling means cannot be obviously employed.

Devices have been developed which use couplants consisting of thin layers of heat-resisting material; for example ceramic powders (USP 4559827).

Such devices must be used at very high pressures to obtain efficient coupling. This inevitably causes defects on the surface of the body examined. Moreover, as the contact is between solid bodies, it can never be constant, and repeatable, so the signal too is inevitably subject to random fluctuations.

Molten metals or salts can be used instead of ceramic powders but this cause troubles on the body to be examined and unavoidably major plant and safety problems.

There are no contact difficulties with the electromagnetic type trasducer. However, these are of but very limited use both because of their low power (to develop power similar to that of piezoelectric transducers they must be much bigger) and because they can be used only on conductive materials.

Finally size, which is a factor common both to piezoelectric and electromagnetic transducers, is particularly important when it is necessary to perform measurements on hot bodies such as metals (slabs, blooms and billets) produced in continuous casting machines. In the zones between the pinch rolls, the useful surface area available to perform measurements is of the order of a few centimeters, so conventional transducers cannot be employed, owing to their large size.

Consequently a device was needed with none of the above-mentioned drawbacks for testing highly-absorbent materials.

A very powerful, highly sensitive shock-wave ultrasonic device of small dimensions has now been conceived to measure very absorbent materials such as marble, stone, refractories and metal bodies at high temperatures, even over 1000 °C. Such device is the object of present invention.

The device according to the present invention comprises the following elements:
-mechanical shock-wave ultrasonic generator;
-detector transducer;
-means for synchronizing signal between generator and detector;
-means for recording transmitted signal.

Instantaneous shock-wave generators with a contact area of less than 10 mm² with the body to be examined can be preferably used. Such generators consist of a striker made of undeformable material with extremely good mechanical properties, such as tungsten carbide, for instance. High-powered signals can thus be generated within a very small volume.

Preferred means for signal detection are conventional ultrasonic piezoelectric transducers of 100 mm or less in diameter. For measurement of hot bodies transducers are used which are preferably smaller than 70 mm in diameter; most preferred are those smaller than 50 mm.

It is possible to select such small conventional transducers without loss of sensitivity or power since with a very strong transmitted signal the detector - even trough conventional -can be one with a very reduced contact area and hence of small size. Coupling problems are also reduced because of the high intensity of the transmitted signal. Furthermore, owing to the specific and different nature of the generator and detector an advantageous compromise can be obtained, which lead to the most suitable signal for the material examined both in frequency and amplitude, thus ensuring very precise measurements.

This is due to the fact that the generator sends out an intense beam of waves in a very wide range of frequencies in the Hz to MHz range, the material tested working like a filter and the detector selects the filtered waves with the highest frequency.

Consequently the device according to the invention always operates at maximum power and sensitivity.

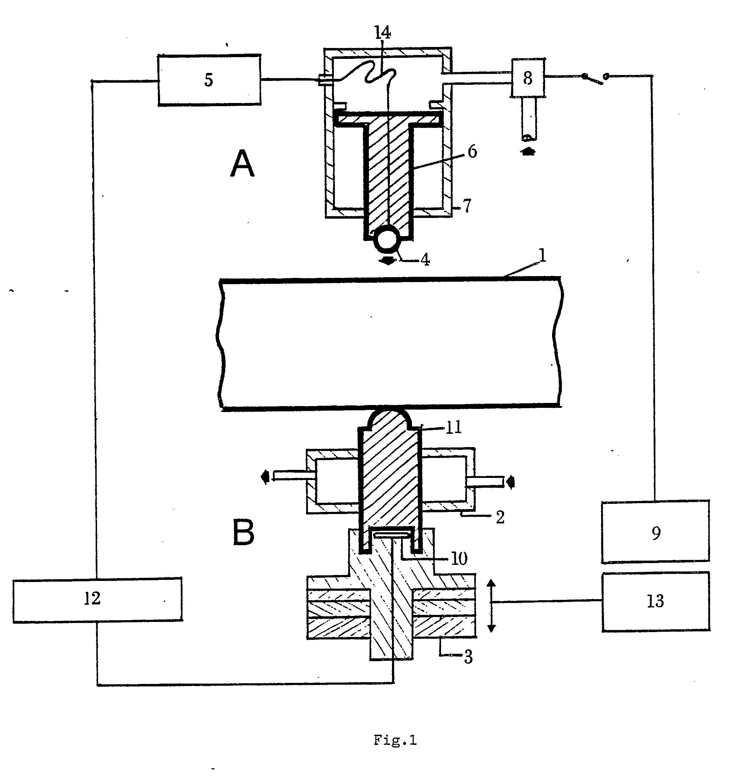

The means for synchronizing and recording the signal are of conventional type, well known to experts in this field. Fig.1 schematically illustrates a particularly preferred embodiment of the device according to the invention. Such illustration should not be considered a limitation of the invention.

As can be seen from the Figure, the specimen (1) to be measured is arranged between the generator (A) and the detector (B). The mechanical shock-wave generator consists of an undeformable tungsten-carbide sphere (4) 10 mm in diameter with relevant electrical connection (14) linking it to the synchronizing system (5) which is connected to an oscilloscope (12).

The sphere is mounted at the end of a piston (6), from which it is electrically insulated, contained in an air cylinder (7), the air being introduced via a solenoid valve (8) controlled by another sync system (9). The diameter of the generator is 50 mm. The detector consists of a conventional piezoelectric transducer (10) at the end of the delay line (11), cooled via the cooling circuit (2) and electrically connected to the oscilloscope (12).

The loading system for the dry coupling (3) connected with the mechanical lifting system (13) also forms part of the detector. This loading system can be of the static or dynamic type with a value of around 50 kg weight, for example.

To check the characteristics of the device according to the present invention, a comparative test has been made using such device (Test A) and a conventional piezoelectric transducer (Test B).

Test A was performed with the device illustrated in Fig.1, consisting of a shock-wave generator capable of producing a 3 mm imprint and a detector consisting of a conventional PZT 5A ceramic piezoelectric transducer with a 2 mm diameter receiving area.

Test B was run with a device using conventional PZT 5A piezoelectric transducers measuring 25 mm in diameter both as generator and detector; operating frequency 500 KHZ.

The tests were carried out on a sample of medium alloy steel 200 mm thick at a temperature of 1050 °C. Experimental conditions were as follows:

Test A): Excitation force equal to that needed to cause a 3 mm diameter imprint on the surface of the sample being examined. Detection sensitivity: (amplitude of signal on detector) V = 100 mV.

Test B): Excitation signal: V 200 mV. Detection sensitivity: (amplitude of signal on detector) V = 100 mV.

From the data it can be derived that for given detection sensitivity the surface areas of the transducers of the device according to the present invention are two orders of magnitude smaller than those of the conventional ultrasonic systems. The advantages of the device of the invention thus derive from the fact that sensitivity and measurement precision are very high, notwithstanding the small size.

The device can therefore be used to perform measurements on highly absorbent bodies in conditions of very little space such as, for instance, in continuous casting plants, between the pinch rolls.

With this device it is possible to perform measurements for control and identification of liquid phases and/or defects inside bodies, especially metallic bodies.

It is also possible to determine and pinpoint defects and/or phases having different densities in highly absorbent nonmetallic bodies such as stone, marble or refractories.

## Claims

1) Small-size, highly-sensitive, high-powered shock-wave ultrasonic device for testing highly absorbent materials, comprising the following elements:
- mechanical shock-wave ultrasonic generator;
- detector transducer;
- means for synchronizing signal between generator and detector;
- means for recording transmitted signal.

2) Device according to Claim 1 wherein the mechanical shock-wave generator has a contact of less than 10 mm² with the body to be tested.

3) Generator according to Claims 1 and 2 consisting of a striker made of undeformable material.

4) Generator according to Claim 3 in which the striker is made of tungsten carbide.

5) Device according to Claim 1 wherein the detector is of the conventional ultrasonic piezoelectric transducer type selected from those 100 mm or less in diameter.

6) Device according to Claim 5 in which the diameter of the piezoelectric transducer is less than 70 mm.

7) Device according to Claim 6 in which the diameter of the piezoelectric transducer is less than 50 mm.

8) Shock-wave ultrasonic device comprising a mechanical shock-wave generator comprising an undeformable tungsten carbide sphere (4) 10 mm in diameter with relevant electrical connection (14) to a synchronizing system (5) which is connected to an oscilloscope (12), said sphere being mounted at the end of a piston (6) electrically insulated from said sphere and contained in an air cylinder (7), the air being introduced via a solenoid valve (8) controlled by another sync system (9); a detector formed of a conventional ultrasonic piezoelectric transducer (10) set at the end of a delay line (11) cooled via a cooling circuit (2) and electrically connected to an oscilloscope (12).

9) Use of the device according to Claims 1 and 8 to test highly absorbent materials selected among marble, stone, refractories and metal bodies at high temperature, even exceeding 1000 °C.

Fig.1